# EUROPEAN PATENT SPECIFICATION

(11) **EP 2 441 635 B1**
(45) Date of publication and mention of the grant of the patent: **21.01.2015**
(21) Application number: 10186769.5
(22) Date of filing: 06.10.2010
(51) Int. Cl.: B60W 50/08, B60W 50/10

(54) **Vehicle User Interface System**
Fahrzeugbenutzer-Schnittstellensysteme
Système d'interface d'utilisateur de véhicule

(43) Date of publication of application: 18.04.2012
(73) Proprietor: Harman Becker Automotive Systems GmbH, 76307 Karlsbad (DE)
(72) Inventor: Platonov, Juri, 82031, Grünwald (DE); Pryakhin, Alexey, 81476, München (DE); Kunath, Peter, 80999, München (DE)
(74) Representative: Bertsch, Florian Oliver

(56) References cited:
- JP-A- 2006 088 722
- US-A1- 2004 207 732
- US-A1- 2006 145 825
- US-A1- 2006 187 199
- US-A1- 2007 057 781

## Description

### Technical Field

The disclosure relates to a vehicle user interface system and to a method of providing a user interface to a vehicle electronic system.

### Background

Modern vehicles often comprise infotainment systems or navigation systems. These systems are generally provided with a large display around which mechanical control elements are arranged. Display and control elements, which are parts of the system's user interface, are in most systems mounted in the dashboard or the center console of the vehicle cabin. For enabling a comprehensive display of information, such displays have a considerable size and accordingly take up a relatively large amount of space in their respective mounting position. Mounting the display at other positions in the vehicle is generally infeasible, as other positions either do not provide enough mounting space or should be kept free of any device, such as the upper part of the dashboard. In particular in the case of an accident, objects projecting out of the upper part of the dashboard can be dangerous to vehicle occupants.

Besides being limited in their mounting position, such user interfaces also require the driver to focus the attention away from the road to the display when looking up information or to the mechanical elements when operating the corresponding system. Due to the plurality of functions that modern vehicle electronic systems, such as navigation devices, provide to a user, the operation generally requires a substantial amount, of time, e.g. for finding the desired mechanical control element or for browsing through menus and submenus for finding a function using a multi-functional control element.

Furthermore, mechanical control elements and displays, such as LCD (liquid crystal display), TFT (thin film transistor) or plasma displays, account for a substantial part of the manufacturing costs of such a vehicle electronic system. Displays also become contaminated by dirt and fingerprints, and may thus become less readable.

It is desirable to provide a user interface that is rather flexible in terms of its positioning. Furthermore, an improved ergonomy of the user interface is desirable, in particular a reduction of the distraction of the driver from the road when operating the user interface. A user interface should also be cost-efficient to produce and have low requirements on maintenance, i.e. its function should not degrade over time.

JP 2006 088722 A discloses a display device for a vehicle in which video images are projected on a dashboard near the driver.

US 2007/057781 A1, considered as the closest prior art, discloses a vehicle heads-up display system in which a display is displayed onto a windscreen of a vehicle, wherein it is determined whether the eyes of the driver are positioned correctly for a correct viewing of the heads-up display.

Accordingly, there is a need for improving the quality of an image projected on a surface of the vehicle cabin.

### Summary

This need is met by the features of the independent claims. In the dependent claims, embodiments are described.

An embodiment provides a vehicle user interface system comprising a projector and a camera arranged in a vehicle cabin. The projector is adapted to receive projection image data and to project an image corresponding to the received projection image data onto a projection surface of the vehicle cabin. The camera is adapted to acquire image data of a region of the vehicle cabin accessible by a hand of a vehicle occupant. The system further comprises a processing unit configured to provide the projection image data to the projector and to adapt the projection image data so as to correct a distortion in the projected image caused by the projection surface. Furthermore, the processing unit is configured to process image data acquired by the camera for detecting a gesture performed by at least a part of a hand of the vehicle occupant as a user input.

As distortions are corrected, the projection surface may be any surface in the vehicle cabin. No additional screen or display may be required, so that the projection surface may also be positioned at the upper part of the vehicle's dashboard. The vehicle occupant, in particular the driver, does accordingly not need to lose the eye contact with the road when observing the projected image. Furthermore, the vehicle occupant can operate the user interface by performing gestures, which relieves the occupant from having to browse through menu structures and to search for mechanical control elements. A distraction of the occupant from the road is thus further reduced.

The user interface can further be provided in a very flexible way. The user may be enabled to adjust the position and/or size of the projected image. Furthermore, the projection surface may be chosen as desired. As the user interface may substitute the user interface placed in the center console or dashboard, additional space becomes available at these places which may be efficiently re-used. Note that the user interface may be provided for any vehicle occupant, e.g. for the driver, for a front seat passenger, or for rear seat passengers.

According to the invention, the region of the vehicle cabin monitored by the cameras comprises the projection surface onto which the image is projected. The processing unit can then be configured to correct the projection image data in accordance with the acquired image data so as to correct distortions in the projected image. A feedback can thus be provided. Distortions may be identified in the acquired image data and a corresponding correction may be performed on the projection image data. This may be done in a particular calibration procedure, or it may be performed continuously. Accordingly, it becomes possible to change the projection surface while still providing a corrected image or to account for changing conditions, e.g. changing light conditions inside the vehicle cabin.

The processing unit may also comprise pre-calibrated correction parameters for correcting the projection image data so as to correct for distortions in the projected image due to the projection surface. Such parameters may for example be provided per vehicle make and model if the projection is to occur to a predetermined surface in
the vehicle cabin. They may also be determined in a calibration procedure performed for the particular projection surface.

The processing unit may for example be configured to correct for at least one of a distortion due to a curvature of the projection surface, a distortion due to a texture of the projection surface and a distortion due to a color of the projection surface. Accordingly, even on a colored, textured and curved projection surface, such as the upper part of the dashboard, an essentially distortion-free image may be obtained.

The projection surface may be a part of an interior component of the vehicle cabin. In particular, the projection surface can be a surface which is not especially provided for the purpose of projection (i.e. it may not be a projection screen additionally provided in the vehicle cabin). The vehicle cabin thus does not need to be equipped with additional components, such as projection screens, which may take up additional space and may not be mounted at positions such as the upper part of the dashboard, due to passenger safety considerations

The projection surface may for example be selected from a group comprising a surface on the vehicle dashboard, a surface on the vehicle's A or B pillar, a surface on a headrest provided in the vehicle cabin, a surface on a backrest of a vehicle seat and a surface on a roof console. Due to the distortion correction, it may be possible to display an essentially distortion-free projection image on each of these surfaces.

According to the invention, the vehicle user interface system further comprises a camera arranged in the vehicle cabin and adapted to monitor the head of the vehicle occupant. The processing unit is further configured to determine a point of view of the vehicle occupant based on image data acquired by the camera and to correct the projection image data so as to correct distortions in the projected image for the point of view of the vehicle occupant. The camera monitoring the head of the vehicle occupant may be the same as the camera monitoring the region for detecting a gesture. It is also possible to provide different separate cameras. The vehicle occupant, in particular the driver, is thus enabled to observe the projected image from his position essentially without distortions. As the viewing angle changes,
for example the perceived curvature of the projection surface may change, which can be accounted for by the vehicle user interface system according to the embodiment.

In particular, the processing unit is configured to determine from the acquired image data the position of the vehicle occupant's face or eye relative to the position of the projection surface so as to obtain a viewing angle of the vehicle occupant, i.e. the angle under which the occupant observes the projection surface. The processing unit then corrects the projection image data in such a way that distortions occurring for the determined viewing angle are corrected in the projected image.

In a further embodiment the projection image data may be configured to comprise at least one graphical control element. The processing unit can be configured to recognize a gesture performed by a finger of the vehicle occupant's hand as an activation of the graphical control element and to provide a corresponding user input to a vehicle electronic system. Such a gesture may for example be the touch of the graphical control element by a finger of the vehicle occupant, or pointing at the control element by a finger of the vehicle occupant or the like. It should be clear that this is only an example and that other gestures may be recognized. Further examples include a wiping gesture with a finger or a part of the hand, e.g. for panning a map section displayed in the projected image, a gesture bringing together or spreading the fingers for zooming in or out, respectively, of a map section displayed in the projection image and the like. The vehicle interface system thus enables an intuitive interaction with the vehicle electronic system to be controlled. With such a configuration, the distraction of the vehicle occupant, in particular the driver, from the road can be minimized.

The projector and/or the camera may be mounted to a roof, to a roof console, to a rear view mirror, to a windscreen or to a pillar of the vehicle cabin. As an example, a camera can be mounted behind the rear view mirror, while the projector is mounted to the roof or the roof console. The projection surface and a region in front thereof may thus be efficiently monitored, while the optical path of the projector is largely undisturbed.

The vehicle user interface system may further comprise an interface to a vehicle electronic system. Such an interface may be used to receive the projection image data from the vehicle electronic system and to transmit detected user inputs to the vehicle electronic system. Accordingly, an efficient and ergonomic operation of the vehicle electronic system may be achieved.

The projector, the camera and the processing unit may be integrated in one device. It is thus easily possible to retrofit a vehicle with the vehicle user interface system. The device can be adapted to be mounted inside the vehicle cabin and can be configured such that when it is mounted to the vehicle cabin, the projector is arranged so as to project the image onto the projection surface and the camera is arranged so as to monitor the region for recognizing a gesture. Mounting of these components is thus facilitated. It should be clear that a further camera may be provided, e.g. at another position for monitoring the occupant's head, which camera can interface the device.

In another embodiment, the processing unit may be part of a vehicle electronic system. The vehicle electronic system itself may then provide the user interface, and may be coupled to the projector and the camera. The vehicle electronic system can thus cost-efficiently be provided with a flexible and ergonomic user interface.

The camera for detecting a gesture and/or the camera for determining the position of the occupant's head may be the camera of a vehicle compartment monitoring system. This may for example be a system monitoring vehicle occupancy, a driver fatigue warning system or the like.

A vehicle electronic system may for example be an infotainment system, a navigation system, a multimedia system or the like.

A further embodiment relates to a method of providing a user interface to a vehicle electronic system. In the method, a projector is provided in a vehicle cabin. The projector is adapted to receive projection image data and to project an image corresponding to the received projection image data onto a projection surface of the vehicle cabin. Furthermore, in the method a camera is provided in the vehicle cabin such that the camera is capable of monitoring a region of the vehicle cabin accessible by a hand of the vehicle occupant. The camera is further capable of acquiring image data of the monitored region. Furthermore, a processing unit is provided in the vehicle cabin. The method further comprises the step of configuring the processing unit so as to provide the projection image data to the projector and to adapt the projection image data for correcting a distortion in the projected image caused by the projection surface. A further step comprises configuring the processing unit so as to process image data acquired by the camera for detecting a gesture performed by at least a part of a hand of the vehicle occupant as a user input.

By such method, a user interface may be obtained which provides advantages similar to the ones outlined above.

In an embodiment, the method further comprises the step of configuring the user interface according to any of the features mentioned above.

It is to be understood that the features mentioned above and those yet to be explained below can be used not only in the respective combinations, but also in other combinations or in isolation, without leaving the scope of the present invention.

### Brief Description of the Drawings

The foregoing and other features of the disclosure will become further apparent from the following detailed description of illustrative embodiments when read in conjunction with the accompanying drawings. In the drawings, like reference numerals refer to like elements.
Fig. 1 schematically illustrates a vehicle user interface system according to an embodiment.
Fig. 2 schematically illustrates a vehicle user interface system according to an embodiment, in which a camera and a projector are provided in one device.
Fig. 3 schematically illustrates a vehicle user interface system according to an embodiment, in which a camera and projector are installed in a vehicle cabin.
Fig. 4 shows a flow diagram illustrating a method according to an embodiment.
Fig. 5 shows a flow diagram illustrating a method according to an embodiment.

### Detailed Description

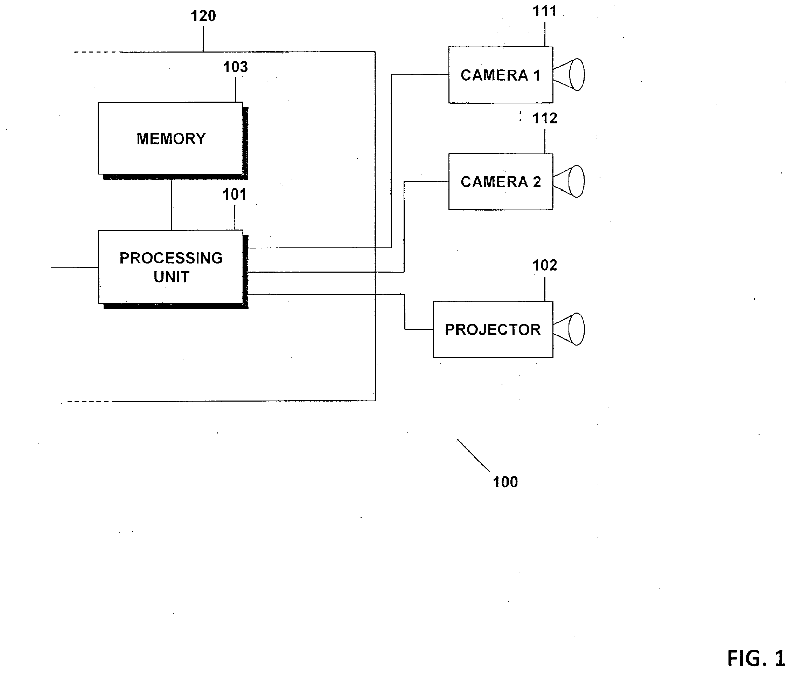

Fig. 1 schematically illustrates a vehicle user interface system 100 comprising a processing unit 101. Processing unit 101 interfaces a memory 103, with both being provided in a device 120. Device 120 can be a controller providing interfaces to a camera 111 and a projector 102, or it may be a vehicle electronic device implementing the user interface. As a controller device, it may be mounted at any suitable position in the vehicle, e.g. in an overhead console or in proximity to one of the cameras or the projector. Similarly, as a vehicle electronic device, such as a navigation system or a multimedia system, it may, but does not need to be, mounted in the center console or under the dashboard of the vehicle. This flexibility is achieved as the user interface is provided by means of the one or more cameras 111, 112 and the projector 102.

Projector 102 is mounted in the vehicle cabin and aligned so as to project an image onto a projection surface. Projector 102 interfaces processing unit 101 from which it receives projection image data which is to be displayed. Projector 102 can be a liquid crystal display (LCD) projector which comprises a light source, a transmissive LCD display element, and imaging optics. The LCD element is illuminated by the light source and an image displayed thereon is projected by means of the imaging optics onto the projection surface. The image displayed on the LCD element is controlled in accordance with the received projection image data. The LCD element may be a thin film transistor (TFT) element comprising three transistors for the colors red, green and blue. Other implementations of projector 102 are certainly conceivable. Such projectors may use a micromirror array (digital light processing, DLP, projector), light emitting diodes (LED projector), a LCOS (liquid crystal on silicon) based projector, a laser projector or the like. The use of a compact projector is particularly advantageous, as it may be mounted at various positions inside the vehicle cabin. Furthermore, as the distance to the projection service is generally rather small (on the order of one meter), the projector does not need to be equipped with a high-powered light source. A cost-efficient projector can thus be provided.

The projection surface can be curved, textured or colored. In particular when projecting onto the upper part of the dashboard, the projection surface will often have a curvature and a texture. This may lead to distortions in the projected image as observed by a vehicle occupant. Processing unit 101 can correct the projection image data, which it receives from a vehicle electronic device, in such way that these distortions of the projected image as observed by the vehicle occupant are removed. For this purpose it may use distortion correction parameters stored in memory 103. These may be preconfigured in case the configuration of the projection surface is known, e.g. if the projector 102 is mounted in a predetermined position and orientation so as to project onto a predetermined surface in a vehicle of a particular model and make.

Processing unit can be configured to apply a transformation to the projection image data, i.e. skew or warp the image data so as to correct for curvature or other spatial variations of the projection surface. Applying such transformation using the distortion correction parameters may also remove distortions due to surface texture in the projected image. Processing unit 101 can further color adjust the projection image data so as to account for a color of the projection surface. As the projector 102 provides an additive mixture of colors, color correction may be performed over a wide range.

Another possibility of performing the distortion correction is the performing of a calibration. This may be achieved by projecting a test image by projector 102 to the projection surface, and recording the projected test image by means of camera 111 or 112.

The acquired image data can then be analyzed by processing unit 101 in order to determine the distortion of the projected image due to the projection surface. Processing unit 101 may then determine the parameters of a transformation between the distorted projected image and the original test image. Based on these parameters, the projection image data may later be corrected so that distortions in the projected image are reduced or compensated. Such a calibration may be performed when the vehicle user interface system 100 is first installed in the vehicle cabin, upon a realignment of the projector, e.g. when changing the projection surface or at startup of the interface system.

It is also conceivable to perform a dynamic correction, in which the distortion correction parameters are determined continuously or at certain points in time. A continuous feedback may for example be provided by camera 111 or 112, which can be beneficial if the environmental conditions change, such as the illumination inside the vehicle cabin. On the other hand, it is also possible to continuously adapt the correction to the viewing angle at which the projected image is viewed by a vehicle occupant.

For this purpose, camera 111 or 112 may be used to monitor the position of the vehicle occupant's head. It is also possible to provide an additional camera for this purpose. The camera can acquire image data comprising at least part of the head of the user. Processing unit 101 can process the image data to identify the location of the user's face or eyes. Processing unit 101 further has information available on the position of the projection surface. It can thus determine the viewing angle under which the vehicle occupant observes the projection surface. The position of the head or eye of the vehicle occupant can be determined by an image processing method. As the position of an occupant, in particular the driver's head, generally varies only in two directions (up/down and forward/backward), the analysis of a 2D image is generally sufficient to determine its position. It is certainly also conceivable to infer the position in a third direction from the size of the head in the image, or to use a stereoscopic or other 3D camera to obtain position information in three dimensions.

Cameras ill and 112 interface processing unit 101. Different implementations of vehicle user interface system 100 are conceivable. In one implementation, camera 111 monitors a region of the vehicle cabin which is accessible by a hand of the vehicle occupant, while camera 112 monitors the position of the occupant's head. The region monitored by camera 111 may for example be the region in front of the projection surface. Camera 111 acquires image data of the region and transmits the image data to processing unit 101. Processing unit 101 analyzes the image data by means of an image analysis method. If a user places a hand in the monitored region, this is recognized by processing unit 101. Processing unit 101 performs a vision-based hand gesture recognition. This can for example be performed by decomposing the acquired image data into a set of features taking individual image frames into account. Based on these features, different postures of the occupant's hand can be recognized. Gestures are generally a sequence of hand postures, and processing unit 101 can be provided with a recognizer for detecting such a sequence. The recognized gestures are interpreted as a user input in order to operate functions of the vehicle electronic device.

The projection image data may for example be configured to display a graphical control element, e.g. within the context of a menu structure having menu items controlling a function or leading to another submenu. Processing unit 101 can now be configured to recognize a gesture from the acquired image data such as a finger of the occupant's hand pointing to the graphical control element or touching the projected graphical control element on the projection surface. If the vehicle electronic device to be controlled is a navigation system, the projection image data may comprise a section of a map to be displayed. Processing unit 101 may now recognize different gestures for controlling the displaying of the map. A possible gesture can be the movement of a finger of the occupant's hand across the displayed map section on the projection surface in order to pan the map into the corresponding direction. Such movement of the user's finger is readily recognized by analyzing the acquired image data as outlined above. Another gesture that may be recognized is the spreading of two fingers on the displayed map section, corresponding to a zoom-in command for displaying the map at a larger scale. On the other hand, the movement of two fingers towards each other may be interpreted as a command to zoom out of the map, i.e. switch to a smaller map scale. It should be clear that these are only a few examples of gestures for the recognition of which processing unit 101 may be configured.

When performing the gesture, the hand of the occupant does not need to actually touch the projection surface. The gesture may also be performed and recognized in some distance to the projection surface, e.g. at a position at which the occupant's hand is usually situated when driving. Distraction of the occupant can thus be minimized.

As the image can be projected to any surface in the vehicle cabin, it is also possible to project it to the upper part of the dashboard and thus in close proximity to the windscreen. The occupant, in particular the driver, may thus observe the projected image without losing eye contact with the road. Driving safety can thus be improved.

In other implementations vehicle user interface system 100 may be provided with only one camera, which monitors the region for recognizing a gesture as a user input. Such a camera may also be adapted and aligned to simultaneously monitor the occupant's head and/or the projection surface, e.g. by using a wide-angle lens. Complexity and manufacturing costs for the user interface system may thus further be reduced. When providing the system with preconfigured distortion correction parameters, it is not necessary to provide a camera monitoring the projection surface at all. As the position and configuration projection surface are known, distortions can still be corrected in dependence on the viewing angle without the need to monitor the projection surface.

The cameras 111 and 112 and the projector 102 can interface processing unit 101 by wireless or wired connection. The cameras and the projector may additionally be provided with connections for power supply. It is also possible to integrate a camera and/or a projector in the device 120. Device 120 may thus be provided as a compact device adapted to be installed inside a vehicle.

The vehicle user interface system 100 may certainly comprise further components. As an example, a stabilization unit may be provided for stabilizing the projected image on the projection surface. In particular when driving, vibrations may lead to a displacement of the projected image on the projection surface. Processing unit 101 may implement an electronic image stabilization, e.g. by shifting the projected image, or projector 102 may comprise an optical stabilization, e.g. in form of a movable lens or the like. Relative movements between the projector and the projection surface can thus be compensated for. Vehicle user interface system 100 can be provided as the only user interface for the vehicle electronic device, e.g. navigation system, without requiring any further components, such as a display or mechanical controls, to be mounted at the center console or dashboard of the vehicle. In other implementations, such components may be provided additionally.

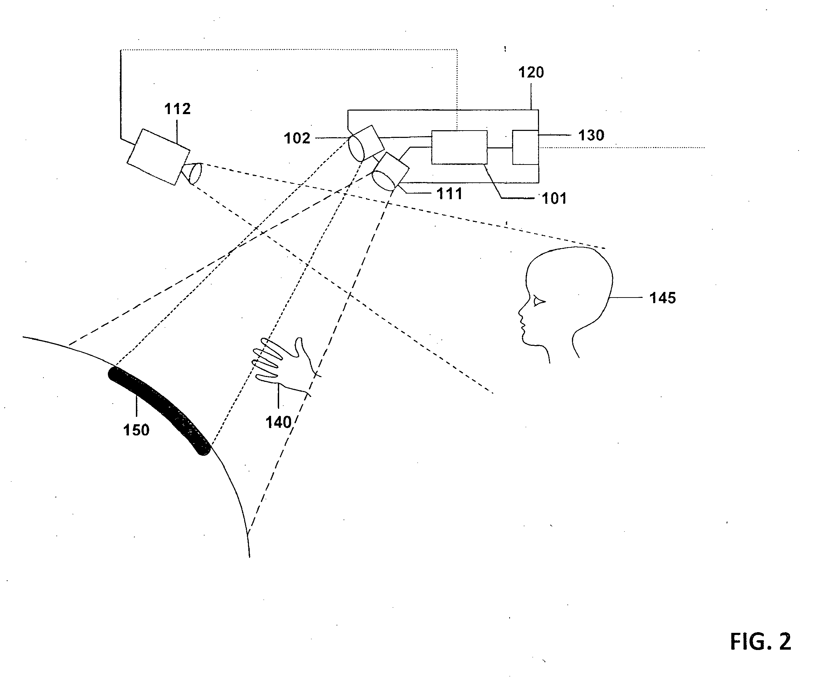

Fig. 2 shows an implementation of the vehicle user interface system 100 in a vehicle cabin. In the embodiment of Fig. 2, the projector 102 and the camera 111 are provided in a device 120 which comprises the processing unit 101 and an interface 130 towards the vehicle electronic device (not shown). Device 120 is mounted to the inside of the roof of the vehicle cabin or comprised in a roof console. Projector 102 is aligned to project the image to the projection surface 150, which is part of the vehicle's dashboard. Note that no additional projection screen or the like is provided in the vehicle cabin, but that any surface inside the vehicle may be used as a projection surface. Camera 111 is arranged in device 120 in such a way that when the device is mounted to the vehicle cabin, the camera monitors a region adjacent to the projection surface 150. As the projection surface 150 is comprised in the monitored region, the image data acquired by camera 111 may also be used by processing unit 101 for determining the image correction, e.g. by making use of a test image or calibration image. A hand 140 of the occupant is detected in the recorded image data and a gesture performed by hand 140 is recognized by processing unit 101 as a user input. The user input is then supplied via interface 130 to the vehicle electronic system.

The vehicle user interface system 100 may comprise the additional camera 112 which is aimed at a region usually comprising the head 145 of the occupant. Camera 112 can again be mounted to the roof of the vehicle cabin, near or to the rear view mirror or at any other suitable position, e.g. the A-pillar or the like. If the head 145 of the occupant is moved up/down or forward/backward, the angle under which projection surface 150 is viewed changes. The position of the occupant's head is readily recognized by analyzing the image data acquired by camera 112 using processing unit 101. As mentioned above, the projection image data is corrected in accordance with the determined viewing angle so that from the position of head 145 a basically distortion-free image can be observed on the projection surface 150. In particular, spatial distortions due to the curvature of the projection surface as perceived at the determined viewing angle are corrected.

The projection image data is received via interface 130 and essentially corresponds to the visual output of the vehicle electronic device. It may as such comprise the graphical user interface of the electronic device and further the information that is to be given out to the user, such as current settings, map data, video data, text messages and the like. By means of the gesture recognition, the occupant can now use hand 140 to operate the graphical user interface. Accordingly, a fully functional user interface (or human machine interface HMI) is provided, by means of which the occupant can interact with the vehicle electronic system.

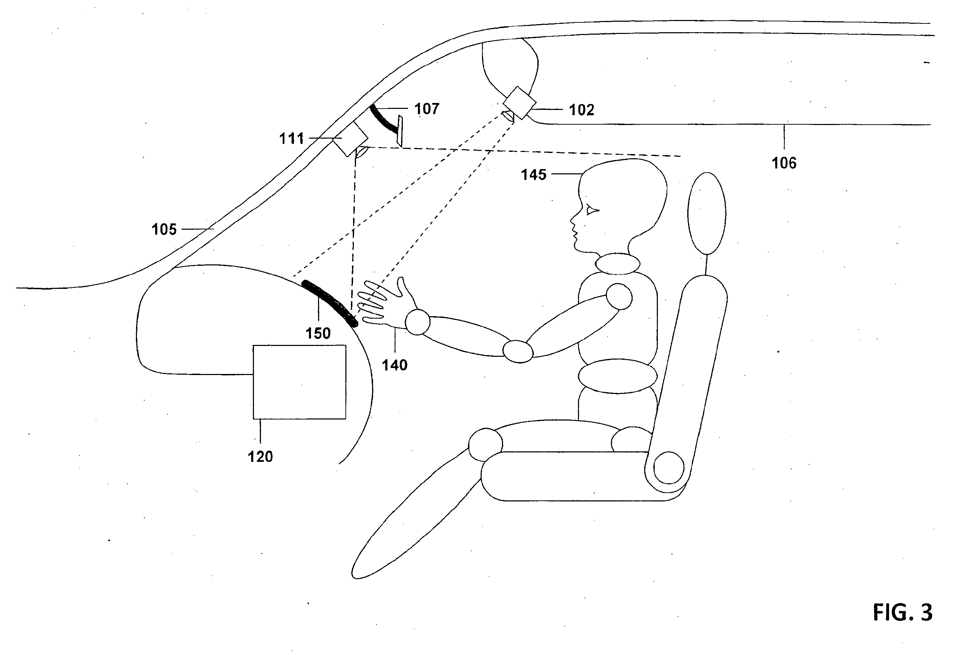

Fig. 3 illustrates another implementation of the vehicle user interface system 100. The implementation of Fig. 3 only comprises one camera 111, which is mounted at or in proximity to the rear view mirror 107 in the vehicle cabin. Camera 111 uses a wide-angle lens and thus simultaneously monitors the region in which hand 140 performs a gestures and the position of the occupant's head 145. Projector 102 is provided in the roof console 106 of the vehicle. Projector 102 can thus project the image without the optical path being interrupted, e.g. by the user's hand. In the system illustrated in Fig. 3, the projection surface 150 is not monitored by a camera. The system may accordingly be provided with predefined correction parameters, which can be adjusted in accordance with the determined viewing angle.

Processing unit 101 can be provided in a device 120 mounted at any position inside the vehicle, e.g. behind the center console or dashboard. In the example of Fig. 3 device 120 itself is a vehicle electronic device, such as a navigation system or multimedia system. Processing system 101 can be implemented by a central processing unit, such as one or more microprocessors of the device 120. This processing unit may thus also operate other applications, e.g. a navigation application, a multimedia application, a communication application, and the like. Device 120 provides interfaces to the camera 111 and projector 102. Again, predetermined gestures performed by hand 140 are determined as a user input and directly processed by the processing unit of device 120. In another implementation, device 120 is a controller device and comprises a further interface towards the vehicle electronic system.

Note that the features mentioned with respect to the different implementations may be combined or modified. As an example, camera 111 in Fig. 3 may also be mounted to the A-pillar 105 of the vehicle cabin, which enables a side view of the occupant and a potentially simpler recognition of the occupant's head position. Separate cameras for monitoring hand 140 and head 145 may also be provided.

In the examples of Figs. 2 and 3, the vehicle occupant is the driver or the front passenger. The system can similarly be implemented for a rear passenger of the vehicle. In that case, the projection surface may for example be provided on a headrest or a backrest of a front seat of the vehicle. Other projection surfaces are also conceivable, such as on the A-pillar 105, a B-pillar, a part of the roof console 106 or the like.

It should be noted that the examples in the figures are merely schematic representations and are not to scale. Furthermore, the particular implementation may strongly depend on the design of the vehicle cabin.

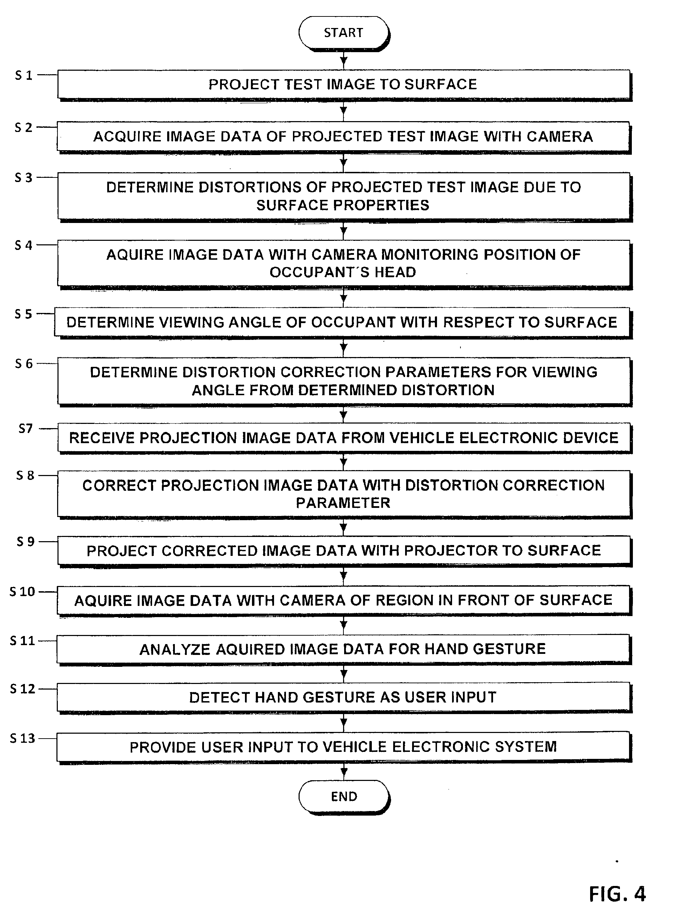

Fig. 4 is a flow diagram schematically illustrating the operation of the vehicle user interface system 100. This method may be adapted in dependence on the particular configuration of the user interface system as outlined above. The embodiment of the method uses a calibration before starting the actual operation and monitors both the projection surface and the occupant's head. In the first step S1, a test image is projected to the projection surface. In step S2, image data of the projected test image is acquired with a camera, such as camera 111. The distortions of the projected test image due to the properties of the projection surface are determined in step S3. By now, a basic correction of the projected image would be possible.

In order to provide a distortion-free image to a particular occupant, image data is acquired with a camera monitoring the position of the occupant's head in step S4. From the position of the projection surface and of the occupant's head, the viewing angle is determined in step S5. For this viewing angle and by using the in step S3 already determined distortions, distortion correction parameters are calculated in step S6.

The projection of an image that appears essentially distortion-free to the occupant is now enabled. In step S7 projection image data is received from the vehicle electronic device. It may be received via the interface 130, or may be received from a different application running on the processing unit 101. The data is corrected with the distortion correction parameters in step S8. Correction here means that the image data is transformed so that when it is projected to the projection surface, it is perceived eventually distortion-free by the occupant. The corrected image data may thus itself comprise substantial distortions if it would be viewed on a flat screen.

The corrected image data is projected to the projection surface in step S9. Image data is acquired with a camera 111 of a region in front of the projection surface (step S10). In step S11, the acquired image data is analyzed for detecting a hand and in particular for recognizing a gesture performed by the hand. If such a hand gesture is performed, this is detected in step S12 as a user input. Gesture detection may be performed as described above with respect to Fig. 1. The detected user input is then provided to the vehicle electronic system in step S13. Again, this may occur via interface 130 or by simply providing the input to an application running on the processing unit.

It should be clear that during operation an image can be projected continuously to projection surface 150, and image data of the region in front of the projection surface can be continuously acquired and analyzed for detecting a user input. A safe, ergonomic and flexible way of operating the vehicle electronic device is thus provided by the interface system 100.

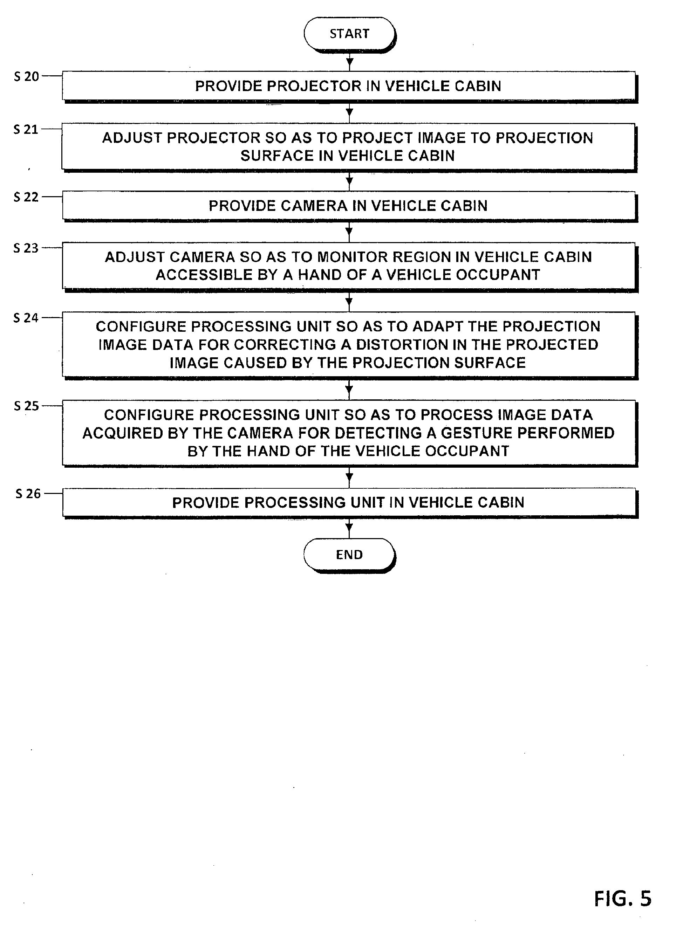

Fig. 5 shows a flow diagram illustrating a method of providing a vehicle user interface system in a vehicle cabin. In step S20, a projector is provided in the vehicle cabin. It can be provided as a single unit or integrated within a larger device to be mounted in the vehicle cabin. In step S21, the projector is adjusted so as to project an image to the projection surface in the vehicle cabin. If provided within the larger device, the projector may already be pre-adjusted so that when the device is mounted in the intended position, it is already aimed at the projection surface.

In step S22, a camera is provided in the vehicle cabin. Again, it may be provided as single unit or integrated in a larger device (e.g. device 120). In step S23, the camera is adjusted so as to monitor a region in the vehicle cabin accessible by a hand of the vehicle occupant. It may also be pre-adjusted in a device so as to aim into the desired direction when the device is mounted to the vehicle cabin.

In step S24, a processing unit is configured so as to adapt the projection image data for correcting a distortion in the projected image caused by the projection surface. This can occur as described above. The processing unit is further configured so as to process image data acquired by the camera for detecting a gesture performed by the hand of the vehicle occupant (step S25). The configuration can again be performed so as to arrive at any of the above-described examples and implementations of the user interface system. In step S26 the processing unit is provided in the vehicle cabin. The processing unit can also be part of the larger device integrating the camera and/or the projector, or may be provided as a controller or implemented in a vehicle electronic system.

It should be clear that the features of the embodiments, examples and implementations described above may be combined. Summarizing, the present disclosure provides a cost-efficient, ergonomic and flexible vehicle user interface system. While specified embodiments of the invention are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A vehicle user interface system (100), comprising:
- a projector (102) arranged in a vehicle cabin and adapted to receive projection image data and to project an image corresponding to the received projection image data onto a projection surface (150) of the vehicle cabin;
- a camera (111) arranged in the vehicle cabin and adapted to acquire image data of a region of the vehicle cabin accessible by a hand (140) of a vehicle occupant;
- a processing unit (101) configured to provide the projection image data to the projector (102) and to adapt the projection image data so as to correct a distortion in the projected image caused by the projection surface (150), the processing unit (101) being further configured to process image data acquired by the camera (111) for detecting a gesture performed by at least a part of a hand (140) of the vehicle occupant as user input, further comprising a camera (111, 112) arranged in the vehicle cabin and adapted to monitor the head (145) of the vehicle occupant, **characterized in that** the processing unit (101) is further configured to determine a point of view of the vehicle occupant based on image data acquired by said camera (111, 112) and to correct the projection image data so as to correct distortions in the projected image for the point of view of the vehicle occupant, wherein the processing unit (101) is further configured to determine from the acquired image data the position of the occupant's face or eye relative to the position of the projection surface (150) so as to obtain a viewing angle of the occupant and to correct the projection image data in such a way that distortions occurring for the determined viewing angle are corrected in the projected image, wherein the region of the vehicle cabin monitored by the camera (111) comprises the projection surface (150) onto which the image is projected, the processing unit (101) being further configured to correct the projection image data in accordance with the acquired image data so as to correct the distortions in the projected image.

2. The vehicle user interface system according to claim 1, wherein the projection surface (150) is a part of an interior component of the vehicle cabin.

3. The vehicle user interface system according to any of the preceding claims, wherein the projection surface (150) is selected from a group comprising a surface on the vehicle dashboard (150), a surface on the vehicle's A- or B-pillar (105), a surface on a headrest provided in the vehicle cabin, a surface on a backrest of a vehicle seat, and a surface on a roof console (106).

4. The vehicle user interface system according to any of the preceding claims, wherein the projection image data is configured to comprise at least one graphical control element, the processing unit (101) being configured to recognize a gesture performed by a finger of the vehicle occupant's hand (140) as an activation of the graphical control element and to provide a corresponding user input to a vehicle electronic system.

5. The vehicle user interface system according to any of the preceding claims, wherein the projector (102) and/or the camera (111, 112) are mounted to a roof, to a roof console (106), to a rear-view mirror (107), to a windscreen, or to a pillar (105) of the vehicle cabin.

6. The vehicle user interface system according to any of the preceding claims, wherein the vehicle user interface system (100) comprises an
interface (130) to a vehicle electronic system.

7. The vehicle user interface system according to any of the preceding claims, wherein the projector (102), the camera (111) and the processing unit (101) are integrated in one device (120) adapted to be mounted the inside of the vehicle cabin.

8. The vehicle user interface system according to any of claims 1-5, wherein the processing unit (101) is part of a vehicle electronic system and/or wherein the camera (111) is a camera of a vehicle compartment monitoring system.

9. The vehicle user interface system according to any of the preceding claims, wherein said processing unit (101) comprises pre-calibrated correction parameters for correcting the projection image data so as to correct for distortions in the projected image due to the projection surface (150).

10. The vehicle user interface system according to any of the preceding claims, wherein the processing unit (101) is configured to correct for at least one of a distortion due to a curvature of the projection surface, a distortion due to a texture of the projection surface, and a distortion due to a colour of the projection surface.

11. A method of providing a user interface to a vehicle electronic system, the method comprising the step of:
- providing a projector (102) in a vehicle cabin, the projector being adapted to receive projection image data and to project an image corresponding to the received projection image data onto a projection surface (150) of the vehicle cabin;
- providing a camera (111) in the vehicle cabin such that the camera is capable of monitoring a region of the vehicle cabin accessible by a hand (140) of a vehicle occupant and to acquire image data of the region;
- providing a processing unit (101) in the vehicle cabin;
- configuring the processing unit (101) so as to provide the projection image data to the projector (102) and to adapt the projection image data for correcting a distortion in the projected image caused by the projection surface (150),
- configuring the processing unit (101) so as to process image data acquired by the camera (111) for detecting a gesture performed by at least a part of a hand (140) of the vehicle occupant as a user input,
wherein a camera is arranged in the vehicle cabin adapted to monitor the head of the vehicle occupant,
wherein a point of view of the vehicle occupant is determined by the processing unit based on image data acquired by said camera (111, 112) and the projection image data are corrected so as to correct distortions in the projected image for the point of view of the vehicle occupant,
wherein the processing unit further determines from the acquired image data the position of the occupant's face or eye relative to the position of the projection surface (150) so as to obtain a viewing angle of the occupant and to correct the projection image data in such a way that distortions occurring for the determined viewing angle are corrected in the projected image, wherein the region of the vehicle cabin monitored by the camera (111) comprises the projection surface (150) onto which the image is projected, the processing unit (101) being further configured to correct the projection image data in accordance with the acquired image data so as to correct the distortions in the projected image.

## Patentansprüche

1. Fahrzeugbenutzerschnittstellensystem (100), umfassend:
- einen Projektor (102), der in einem Fahrgastraum angeordnet ist und dazu ausgebildet ist, Projektionsbilddaten zu empfangen und ein Bild, das den empfangenen Projektionsbilddaten entspricht, auf eine Projektionsfläche (150) des Fahrgastraums zu projizieren;
- eine Kamera (111), die im Fahrgastraum angeordnet ist und dazu ausgebildet ist, Bilddaten einer Region des Fahrgastraums zu erfassen, die für eine Hand (140) eines Fahrzeuginsassen zugänglich ist;
- eine Verarbeitungseinheit (101), die dazu konfiguriert ist, die Projektionsbilddaten an den Projektor (102) bereitzustellen und die Projektionsbilddaten derart anzupassen, dass eine Verzerrung im projizierten Bild, die von der Projektionsfläche (150) verursacht wird, korrigiert wird, wobei die Verarbeitungseinheit (101) ferner dazu konfiguriert ist, Bilddaten, die von der Kamera (111) erfasst werden, zu verarbeiten, um eine Geste, die von wenigstens einem Teil einer Hand (140) des Fahrzeuginsassen ausgeführt wird, als Benutzereingabe zu erkennen, ferner umfassend eine Kamera (111, 112), die im Fahrgastraum angeordnet ist und dazu ausgebildet ist, den Kopf (145) des Fahrzeuginsassen zu überwachen, **dadurch gekennzeichnet, dass**
die Verarbeitungseinheit (101) ferner dazu konfiguriert ist, eine Perspektive des Fahrzeuginsassen auf Grundlage der Bilddaten zu bestimmen, die von der Kamera (111, 112) erfasst werden, und die Projektionsbilddaten derart zu korrigieren, dass Verzerrungen im projizierten Bild für die Perspektive des Fahrzeuginsassen korrigiert werden, wobei die Verarbeitungseinheit (101) ferner dazu konfiguriert ist, anhand der erfassten Bilddaten die Position des Gesichts oder Auges des Insassen im Verhältnis zur Position der Projektionsfläche (150) zu bestimmen, um einen Blickwinkel des Insassen zu erlangen, und die Projektionsbilddaten derart zu korrigieren, dass Verzerrungen, die für den bestimmten Blickwinkel auftreten, im projizierten Bild korrigiert werden, wobei die Region des Fahrgastraums, die von der Kamera (111) überwacht wird, die Projektionsfläche (150) umfasst, auf die das Bild projiziert wird, wobei die Verarbeitungseinheit (101) ferner dazu konfiguriert ist, die Projektionsbilddaten entsprechend den erfassten Bilddaten zu korrigieren, um die Verzerrungen im projizierten Bild zu korrigieren.

2. Fahrzeugbenutzerschnittstellensystem nach Anspruch 1, wobei die Projektionsfläche (150) ein Teil einer Innenkomponente des Fahrgastraums ist.

3. Fahrzeugbenutzerschnittstellensystem nach einem der vorangehenden Ansprüche, wobei die Projektionsfläche (150) ausgewählt ist aus einer Gruppe, die eine Fläche am Fahrzeugarmaturenbrett (150), eine Fläche an der A- oder B-Säule (105) des Fahrzeugs, eine Fläche an einer Kopfstütze im Fahrgastraum, eine Fläche an einer Rückenlehen eines Fahrzeugsitzes und eine Fläche an einer Dachkonsole (106) umfasst.

4. Fahrzeugbenutzerschnittstellensystem nach einem der vorangehenden Ansprüche, wobei die Projektionsbilddaten dazu konfiguriert sind, wenigstens ein grafisches Steuerelement zu umfassen, wobei die Verarbeitungseinheit (101) dazu konfiguriert ist, eine Geste, die von einem Finger der Hand (140) des Fahrzeuginsassen ausgeführt wird, als eine Aktivierung des grafischen Steuerelements zu erkennen und eine entsprechende Benutzereingabe in ein Fahrzeugelektroniksystem bereitzustellen.

5. Fahrzeugbenutzerschnittstellensystem nach einem der vorangehenden Ansprüche, wobei der Projektor (102) und/oder die Kamera (111, 112) an einem Dach, einer Dachkonsole (106), einem Rückspiegel (107), einer Windschutzscheibe oder eine Säule (105) des Fahrgastraums angebracht sind.

6. Fahrzeugbenutzerschnittstellensystem nach einem der vorangehenden Ansprüche, wobei das Fahrzeugbenutzerschnittstellensystem (100) eine Schnittstelle (130) zu einem Fahrzeugelektroniksystem umfasst.

7. Fahrzeugbenutzerschnittstellensystem nach einem der vorangehenden Ansprüche, wobei der Projektor (102), die Kamera (111) und die Verarbeitungseinheit (101) in einer Vorrichtung (120) integriert sind, die dazu ausgebildet ist, im Inneren des Fahrgastraums angebracht zu werden.

8. Fahrzeugbenutzerschnittstellensystem nach einem der Ansprüche 1-5, wobei die Verarbeitungseinheit (101) Teil eines Fahrzeugelektroniksystems ist und/oder wobei die Kamera (111) eine Kamera eines Fahrzeuginnenraumüberwachungssystems ist.

9. Fahrzeugbenutzerschnittstellensystem nach einem der vorangehenden Ansprüche, wobei die Verarbeitungseinheit (101) vorkalibrierte Korrekturparameter zum Korrigieren der Projektionsbilddaten umfasst, um durch die Projektionsfläche (150) bedingte Verzerrungen im projizierten Bild zu korrigieren.

10. Fahrzeugbenutzerschnittstellensystem nach einem der vorangehenden Ansprüche, wobei die Verarbeitungseinheit (101) dazu konfiguriert ist, wenigstens eine von einer Verzerrung aufgrund einer Krümmung der Projektionsfläche, einer Verzerrung aufgrund einer Struktur der Projektionsfläche und einer Verzerrung aufgrund einer Farbe der Projektionsfläche zu korrigieren.

11. Verfahren zum Bereitstellen einer Benutzerschnittstelle zu einem Fahrzeugelektroniksystem, wobei das Verfahren folgenden Schritt umfasst:
- Bereitstellen eines Projektors (102) in einem Fahrgastraum, wobei der Projektor dazu ausgebildet ist, Projektionsbilddaten zu empfangen und ein Bild, das den empfangenen Projektionsbilddaten entspricht, auf eine Projektionsfläche (150) des Fahrgastraums zu projizieren;
- Bereitstellen einer Kamera (111) im Fahrgastraum, derart, dass die Kamera eine Region des Fahrgastraums überwachen kann, die für eine Hand (140) eines Fahrzeuginsassen zugänglich ist, und Bilddaten der Region erfassen kann;
- Bereitstellen einer Verarbeitungseinheit (101) im Fahrgastraum;
- Konfigurieren der Verarbeitungseinheit (101) dazu, dass die Projektionsbilddaten an den Projektor (102) bereitgestellt werden und die Projektionsbilddaten zum Korrigieren einer Verzerrung im projizierten Bild bereitgestellt werden, die von der Projektionsfläche (150) verursacht wird,
- Konfigurieren der Verarbeitungseinheit (101) dazu, dass die Projektionsbilddaten, die von der Kamera (111) zum Erkennen einer Geste, die von wenigstens einem Teil einer Hand (140) des Fahrzeuginsassen ausgeführt wird, als eine Benutzereingabe verarbeitet werden,
wobei eine Kamera derart im Fahrgastraum angeordnet wird, dass sie dazu ausgebildet wird, den Kopf des Fahrzeuginsassen zu überwachen,
wobei eine Perspektive des Fahrzeuginsassen von der Verarbeitungseinheit auf Grundlage von Bilddaten bestimmt wird, die von der Kamera (111, 112) erfasst werden, und die Projektionsbilddaten korrigiert werden, um Verzerrungen im projizierten Bild für die Perspektive des Fahrzeuginsassen zu korrigieren,
wobei die Verarbeitungseinheit ferner anhand der erfassten Bilddaten die Position des Gesichts oder Auges des Insassen im Verhältnis zur Position der Projektionsfläche (150) bestimmt, um einen Blickwinkel des Insassen zu erlangen und die Projektionsbilddaten derart zu korrigieren, dass Verzerrungen, die für den bestimmten Blickwinkel auftreten, im projizierten Bild korrigiert werden, wobei die Region des Fahrgastraums, die von der Kamera (111) überwacht wird, die Projektionsfläche (150) umfasst, auf die das Bild projiziert wird, wobei die Verarbeitungseinheit (101) ferner dazu konfiguriert wird, die Projektionsbilddaten entsprechend den erfassten Bilddaten zu korrigieren, um die Verzerrungen im projizierten Bild zu korrigieren.

## Revendications

1. Système (100) à interface d'utilisateur de véhicule, comprenant :
- un projecteur (102) disposé dans un habitacle de véhicule et conçu pour recevoir des données d'image de projection et pour projeter une image correspondant aux données d'image de projection reçues sur une surface de projection (150) de l'habitacle du véhicule ;
- une caméra (111) disposée dans l'habitacle du véhicule et conçue pour acquérir des données d'image d'une région de l'habitacle du véhicule accessible par une main (140) d'un occupant du véhicule ;
- une unité de traitement (101) configurée pour donner des données d'image de projection au projecteur (102) et pour adapter les données d'image de projection de manière à corriger une distorsion dans l'image projetée causée par la surface de projection (150), l'unité de traitement (101) étant en outre configurée pour traiter des données d'image de traitement acquises par la caméra (111) pour détecter un geste effectué par au moins une partie d'une main (140) de l'occupant du véhicule sous la forme d'une entrée d'utilisateur, comprenant en outre une caméra (111, 112) disposée dans l'habitacle du véhicule et conçue pour suivre la tête (145) de l'occupant du véhicule, **caractérisé en ce que** l'unité de traitement (101) est en outre configurée pour déterminer un point de vue de l'occupant du véhicule en fonction des données d'image acquises par ladite caméra (111, 112) et pour corriger les données d'image de projection de manière à corriger des distorsions dans l'image projetée pour le point de vue de l'occupant du véhicule, l'unité de traitement (101) étant en outre configurée pour déterminer à partir des données d'image acquises la position du visage ou de l'oeil de l'occupant par rapport à la position de la surface de projection (150), de manière à obtenir un angle de vision de l'occupant et de corriger les données d'image de projection de manière que des distorsions se produisant pour l'angle déterminé de visualisation soient corrigées dans l'image projetée, la région de l'habitacle de véhicule surveillée par la caméra (111) comprenant la surface de projection (150) sur laquelle l'image est projetée, l'unité de traitement (101) étant en outre configurée pour corriger les données d'image de projection en fonction des données d'image acquises, de manière à corriger les distorsions dans l'image projetée.

2. Système à interface d'utilisateur de véhicule selon la revendication 1, dans lequel la surface de projection (150) fait partie d'un composant intérieur de l'habitacle du véhicule.

3. Système à interface d'utilisateur de véhicule selon l'une quelconque des revendications précédentes, dans lequel la surface de projection (150) est choisie dans un ensemble comprenant une surface sur le tableau de bord du véhicule (150), une surface située sur le montant A ou B (105) du véhicule, une surface située sur un appui-tête prévu dans l'habitacle du véhicule, une surface située sur un dossier de siège de véhicule et une surface située sur une console de toit (106).

4. Système à interface d'utilisateur de véhicule selon l'une quelconque des revendications précédentes, dans lequel les données d'image de projection sont configurées pour comprendre au moins un élément de contrôle graphique, l'unité de traitement (101) étant configurée pour reconnaître un geste effectué par un doigt de la main (140) de l'occupant du véhicule en tant qu'activation de l'élément de contrôle graphique, et pour envoyer une entrée correspondante d'utilisateur à un système électronique de véhicule.

5. Système à interface d'utilisateur de véhicule selon l'une quelconque des revendications précédentes, dans lequel le projecteur (102) et/ou la caméra (111, 112) sont montés sur un toit, sur une console de toit (106), sur un miroir de vue arrière (107), sur un pare-brise ou sur un montant (105) de l'habitacle du véhicule.

6. Système à interface d'utilisateur de véhicule selon l'une quelconque des revendications précédentes, dans lequel le système (100) à interface d'utilisateur de véhicule comprend une interface (130) avec un système électronique de véhicule.

7. Système à interface d'utilisateur de véhicule selon l'une quelconque des revendications précédentes, dans lequel le projecteur (102), la caméra (111) et l'unité de traitement (101) sont intégrés en un dispositif (120) conçu pour être monté à l'intérieur de l'habitacle du véhicule.

8. Système à interface d'utilisateur de véhicule selon l'une quelconque des revendications 1 à 5, dans lequel l'unité de traitement (101) fait partie d'un système électronique de véhicule et/ou dans lequel la caméra (111) est une caméra d'un système de surveillance de l'habitacle du véhicule.

9. Système à interface d'utilisateur de véhicule selon l'une quelconque des revendications précédentes, dans lequel l'unité de traitement (101) comprend des paramètres de correction précalibrés permettant de corriger les données d'image de projection, de manière à corriger les distorsions dans l'image projetée dues à la surface de projection (150).

10. Système à interface d'utilisateur de véhicule selon l'une quelconque des revendications précédentes, dans lequel l'unité de traitement (101) est configurée pour corriger au moins soit une distorsion due à une courbure de la surface de projection, soit une distorsion due à une texture de la surface de projection, soit une distorsion due à une couleur de la surface de projection.

11. Procédé d'apport d'une interface d'utilisateur à un système électronique de véhicule, ce procédé comprenant les étapes suivantes :
- prendre un projecteur (102) dans un habitacle du véhicule, le projecteur étant conçu pour recevoir des données d'image de projection et pour projeter une image correspondant aux données d'image de projection reçues sur une surface de projection (150) de l'habitacle du véhicule ;
- prendre une caméra (111) dans l'habitacle du véhicule, de sorte que la caméra soit à même de suivre une région de l'habitacle du véhicule accessible par une main (140) d'un occupant de véhicule et pour acquérir des données d'image de la région ;
- prendre une unité de traitement (101) dans l'habitacle du véhicule ;
- configurer l'unité de traitement (101) de manière à transmettre les données d'image de projection au projecteur (102) et à adapter les données d'image de projection pour corriger une distorsion de l'image projetée causée par la surface de projection (150),
- configurer l'unité de traitement (101) de manière à traiter les données d'image acquises par la caméra (111) afin de détecter un geste effectué par au moins une partie d'une main (140) de l'occupant du véhicule en tant qu'entrée d'utilisateur,
une caméra étant disposée dans la cabine de véhicule conçue pour suivre la tête de l'occupant du véhicule,
un point de vue de l'occupant du véhicule étant déterminée par l'unité de traitement en fonction des données d'image acquises par ladite caméra (111, 112) et les données d'image de projection étant corrigées de manière à corriger les distorsions dans l'image projetée pour le point de vue de l'occupant du véhicule,
l'unité de traitement déterminant en outre à partir des données d'image acquises la position du visage ou de l'oeil de l'occupant par rapport à la position de la surface de projection (150), de manière à obtenir un angle de visualisation de l'occupant et à corriger les données d'image de projection de manière que les distorsions se produisant pour l'angle déterminé de visualisation soient corrigées dans l'image projetée, la région de l'habitacle du véhicule surveillée par la caméra (111) comprenant la surface de projection (150) sur laquelle l'image est projetée, l'unité de traitement (101) étant en outre configurée pour corriger les données d'image de projection conformément aux données d'image acquises, de manière à corriger les distorsions dans l'image projetée.
